Europäisches Patentamt

European Patent Office

Office européen des brevets

(11) Numéro de publication: **0 091 844**
**B1**

(12) **FASCICULE DE BREVET EUROPEEN**

(45) Date de publication du fascicule du brevet: **19.11.87**

(21) Numéro de dépôt: **83400543.1**

(22) Date de dépôt: **16.03.83**

(51) Int. Cl.⁴: **F 16 L 41/00, F 16 L 15/00**

(54) **Joint d'étanchéité disposé entre un appareil et un raccord vissé pour tuyauterie de fluide à haute pression.**

(30) Priorité: **08.04.82 FR 8206187**

(43) Date de publication de la demande:
**19.10.83 Bulletin 83/42**

(45) Mention de la délivrance du brevet:
**19.11.87 Bulletin 87/47**

(84) Etats contractants désignés:
**CH DE GB LI SE**

(56) Documents cités:
**GB-A- 956 591**
**NL-C- 110 837**
**US-A-3 888 496**

(73) Titulaire: **Legris-Société Anonyme dite**
**29, rue de la Palestine**
**F-35014 Rennes Cedex (FR)**

(72) Inventeur: **Legris, André**
**18, rue des Professeurs Pellé**
**F-35000 Rennes (FR)**

(74) Mandataire: **Dubreuil, Annie**
**Cabinet DUBREUIL 7, rue de Keroman**
**F-56100 Lorient (FR)**

Courier Press, Leamington Spa, England.

**Description**

La présente invention a pour objet un joint d'étanchéité disposé entre un raccord et l'appareil sur lequel est vissé le raccord, notamment pour les circuits de fluide en général et en particulier pour les circuits d'asservissement hydraulique à haute pression.

Les raccords pour fluide hydraulique à haute pression sont toujours vissés sur les appareils et malgré les recherches effectuées dans ce domaine l'étanchéité des organes vissés n'a pu être maîtrisée de telle sorte que les fuites de liquide présentent de graves inconvénients tant sur le plan pécuniaire, que sur le plan des dégâts occasionnés par lesdites fuites. On a pu constater que la moitié des fuites des installations d'asservissement hydraulique est imputable à l'implantation par vissage des raccords. Toutes les grandes entreprises et en particulier celles de l'industrie automobile rencontrent cette difficulté et remettent en question l'utilisation de l'asservissement hydraulique qui pourtant est très important. Pour une seule entreprise les fuites de liquide peuvent atteindre près de deux millions de litres d'huile qui doivent être remplacés et dont le prix est de plus en plus élevé.

Par ailleurs tous les liquides de coupe pour l'usinage doivent être souvent remplacés, car ils sont pollués par ces fuites d'huile. Enfin les planchers en béton des bâtiments sont dégradés par l'huile qui est répandue sur ceux-ci et ils ne supportent plus la charge des chaînes de montage ou d'usinage; en conséquence, il est nécessaire dans certains cas de les démolir et de les reconstruire. Pour prévenir ces inconvénients, il est prévu un personnel de nettoyage et d'entretien qui assure le nettoyage du sol, le nettoyage et la vidange des bacs de liquide de coupe des machines d'usinage et le resserrage des raccords pour supprimer autant qu'il est possible les fuites de liquide. Toutefois, ces fuites sont très difficiles à déceler du fait qu'il s'agit d'un suintement goutte à goutte.

Les pressions élevées et surtout les cycles très rapides des machines actuelles, ainsi que les vibrations, communiquent des à-coups de pression très violents qui ébranlent les implantations visées des raccords en créant des micromatages des parties métalliques en contact, ainsi que des microjeux, donnant passage à des suintements d'huile très pernicieux. La cause de ces fuites d'huile réside dans le fait que les joints d'étanchéité ne permettent pas d'obtenir une étanchéité absolue des implantations vissées de raccords.

Un tel joint d'étanchéité doit répondre aux conditions d'utilisation mentionnées ci-après.

Le raccord vissé avec son joint doit être étanche de la pression nulle à une pression d'épreuve de 600 bars. Les joints doivent pouvoir être étanches avec le maximum de formes de raccords et d'implantations vissées existantes. Le joint doit supporter des imperfections d'usinage de l'implantation à vis et compenser les imperfections. Le joint doit pouvoir supporter sans détérioration quatre ou cinq démontages et remontages du raccord sur l'appareil. Le joint doit pouvoir résister à une température de 100°C en continu. La pression de service du circuit hydraulique est comprise entre 0 et 400 bars. Les joints doivent résister aux fluides d'asservissement hydraulique tels que les produits pétroliers, un mélange d'eau et de glycol, et également fluides ininflammables du commerce. La durée de l'étanchéité doit correspondre à environ 20 000 heures de machine ou dix ans d'âge et à environ cinq millions de cycles.

Le montage doit s'effectuer avec un personnel non spécialisé dont la période d'adaptation est de quelques heures seulement.

Le joint d'étanchéité suivant l'invention est un joint universel qui est capable d'assurer l'étanchéité de nombreux types d'implantations vissées de raccords.

Les difficultés qui ont été mentionnées ci-dessus pour obtenir une étanchéite totale ont donné naissance à de nombreuses implantations de raccords, mais pratiquement sans aucun succès. Ils ne sont étanches que si toutes les conditions de qualité maximale d'usinage sont réunies ce qui dans le meilleur des cas ne saurait dépasser dans ces fabrications entre 80 à 90%. Il y a donc lieu de compter sur au moins 20 à 10% d'implantations de raccord présentant des fuites.

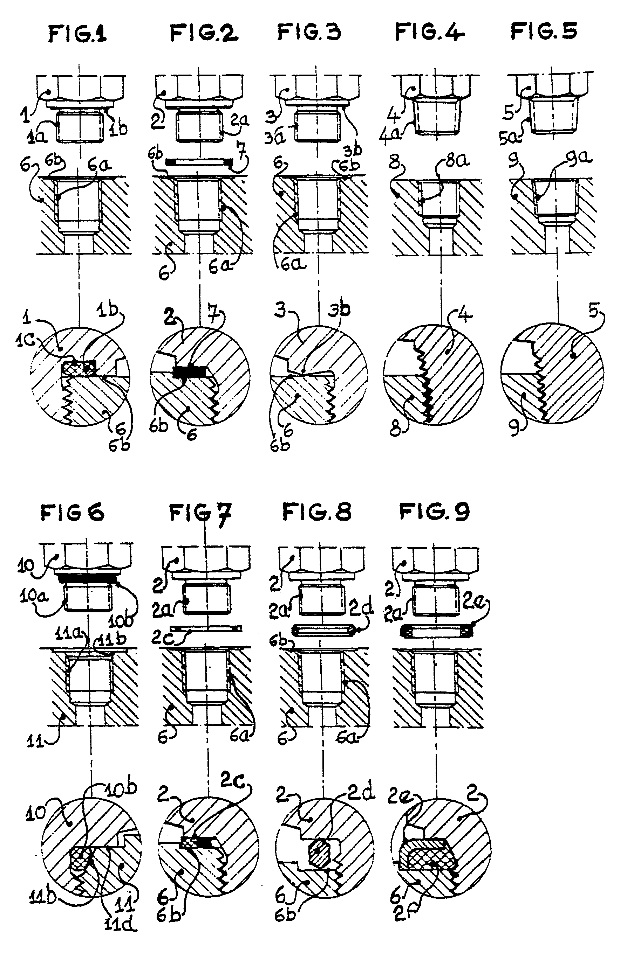

A la figure 1, on a représenté un raccord 1 dont la partie cylindrique filetée, 1a est vissée dans on trou taraudé cylindrique 6a du corps 6 d'un appareil. Un joint torique 1b en caoutchouc est disposé dans un logement annulaire 1c du raccord 1. Lorsque l'usinage est parfait, le dispositif est étanche, car le joint est bein enfermé. Toutefois, ce dispositif ne supporte pas le faux équerrage de la face 6b (extrusion du joint par l'espace laissé libre par le jeu), un mauvais étant de la surface 6b, notamment de petites rayures qui occasionnent des suintements, les fluides inadaptés au caoutchouc, les températures supérieures à 100°C.

A la figure 2, on a représenté un raccord 2 dont la partie cylindrique filetée 2a est vissée dans un trou cylindrique taraudé 6a, et un joint en cuivre 7 est maintenu serré à plat entre le raccord 2 et le logement plat 6b. Ce dispositif simple ne supporte pas un faux équerrage qui provoque une fuite, un état de suface trop grossier de la face 6b, un lamage 6b différent du diamètre extérieur du joint, une absence de lamage. Le joint en cuivre doit être maintenu par son diamètre extérieur pour résister à la pression.

A la figure 3, on a représenté un raccord 3 dont la partie cylindrique filetée 3a est vissée dans un trou taraudé 6a. Le raccord comporte une arête périphérique 3b qui constitue une portée métallique d'étanchéite sur la face 6b. Ce dispositif ne tolère aucun faux équerrage de la face 6b (même léger) sans risque de fuites, un mauvais état de la surface 6b, des coups ou marques sur l'arête 3b.

A la figure 4, on a représenté un raccord 4 dont la partie filetée conique 4a est vissée avec un serrage radial dans un trou taraudé cylindrique 8a. L'étanchéité est obtenue au moyen d'un joint fin constitué d'un ruban en matière plastique placé entre le filetage et le taraudage ou bien à l'aide d'une colle constituant un joint spécial. La matière plastique ne tient pas et elle est extrudée par les pressions élevées. Enfin, la colle spéciale n'est par totalement efficace, car sa répartition sur le filetage n'est pas égale sur tout le pourtour.

A la figure 5, on a représenté un raccord 5 présentant une partie filetée conique 5a qui est vissée dans un trou taraudé conique 9a. L'étanchéité est obtenue au moyen d'un ruban fin en matière plastique disposé entre le filetage et le taraudage, au moyen d'une colle ou sans moyen intermédiaire, mais toujours avec un très fort serrage. Cependant, les appareils ne résistent pas toujours à un tel serrage et se fendent quelquefois.

A la figure 6, on a représenté un raccord 10 présentant une partie filetée cylindrique 10a qui est vissée dans un trou taraudé cylindrique 11a, l'étanchéité étant réalisée par un joint torique 10b en caoutchouc emprisonné entre une gorge du raccord et une partie conique 11b de l'appareil 11. Ce dispositif ne supporte pas le faux équerrage de la face 11d, un mauvais état de surface (rayures) de la partie conique 11b, les fluides inadaptés au caoutchouc, les trop fortes pressions et les températures supérieures à 100°C.

A la figure 7, on a représenté un raccord dont le montage est identique à celui de la figure 2, seul le joint étant différent. Dans ce cas, le joint est composite et il comprend une rondelle en acier sur lequel est adhérisé dans sont alésage un joint en caoutchouc dont les lèvres sont en appui sur le raccord et sur la face 6b. Ces joints sont bien connus en hydraulique; mais ce dispositif ne supporte pas un faux équerrage de la face 6b, un mauvais état de surface (rayures) de la face 6b, les pressions élevées, les fluides non adaptés au caoutchouc et les températures supérieures à 100°C.

A la figure 8, on a représente un raccord identique à celui de la figure 2, dans lequel seul le joint est différent. Dans ce cas, le joint présente une double arête couteau 2d qui est en acier dur traité et s'incruste au serrage dans les faces d'appui du raccord et de la face 6b. Cette bague coupante ne supporte pas un faux équerrage de la face 6b assez important, le démontage et le remontage du joint, car il est pratiquement impossible de remettre, lors du vissage, les arêtes coupantes dans leurs premières empreintes et il en résulte des fuites.

A la figure 9, on a représenté un raccord et un trou taraudé cylindrique identiques à la figure 2. Seul le joint est différent et il comprend une coupelle en acier 2e, garnie d'un joint en caoutchouc 2f. Théoriquement le joint en caoutchouc remplit complètement et seulement la coupelle, mais, en réalité, il est impossible d'obtenir un volume de caoutchouc exactement suffisant. Dans le cas où le volume de caoutchouc est insuffisant, la coupelle n'est pas pleine et il se produit une fuite. Dans l'autre cas, il y a trop de caoutchouc et la coupelle ne peut emprisonner tout le joint qui soulève la coupelle et s'extrude en produisant des fuites.

Les dispositifs correspondant aux figures 1 à 8 qui sont les plus utilisés, ne permettent donc pas d'obtenir une étanchéité réellement sûre et ils présentent tous des défauts importants. Avec ces dispositifs d'étanchéité, il faut comprendre que, même si les usinages et les lamages des faces ont été effectués avec beaucoup de soin, avec des mèches de forme, il n'en demeure pas moins que le taraudage, qui est effectué souvent en reprise, est souvent de travers et présente un faux equerrage avec les faces d'appui des appareils. En réalité, c'est l'opération de taraudage qui entraîne de graves défauts et aussi les coups et rayures sur les pièces usinées pendant les manipulations et le transport.

Le brevet britannique N°. GB—A 956.591, concerne un dispositif de montage d'un raccord à vis sur un tuyau dont l'axe est disposé perpendiculairement à l'axe du raccord. Le document expose que ce branchement d'un conduit secondaire sur un conduit principal permet un mouvement du conduit secondaire, sans affecter l'étanchéité du joint. En effet, dans un tel raccordement, le joint se trouve en contact avec une partie cylindrique du conduit principal et l'étanchéité est particulièrement difficile dans ce cas.

Dans la présente demande, il s'agit de résoudre un problème totalement différent qui consiste à monter un raccord pour tuyauterie sur un appareil présentant un trou taraudé et une surface plane (6b) entourant le dit trou taraudé, ladite surface plane pouvant présenter de petites rayures ou défauts qui sont comblés par la matière fluable de l'organe d'étanchéité.

Dans le brevet britannique n° GB—A 956, 591 et à la figure 5, le dispositif est constitué d'une bague ou collier de retenue (24) dans laquelle est engagé un joint d'étanchéité (22a) en matière élastique, qui est comprimé par un bague de pression (21) engagée partiellement dans la bague (24) avec du jeu et soumise à l'action d'un écrou (20) vissé sur la partie filetée du raccord.

Le brevet néerlandais n° NL—C 110.83 7 concerne le montage d'un manchon vissé sur l'extrémité filetée d'un tuyau par l'intermédiaire d'un écrou; il s'agit donc d'un montage différent de celui suivant la présente demande, dans lequel un raccord vient en appui contre la surface plane de l'appareil, qui présente un trou taraudé dans lequel est vissé le raccord.

Dans le dispositif suivant le document cité, l'écrou (11) vissé sur la partie filetée du tuyau (18) présente une gorge dans laquelle est monté une garniture d'étanchéité (21) en matière élastique et une bague (15) en matière rigide (métallique), ladite bague (15) étant serrée par le manchon (20) pour comprimer le joint d'étanchéité (21) dans la gorge, afin de réaliser l'étanchéité du manchon.

En résumé, les documents mentionnés ci-dessus ne concernent pas un joint indépendant et monobloc comme dans la présente demande et qui peut se monter sans précaution comme un vulgaire joint en cuivre.

Dans les documents cités, il s'agit d'écrous avec joint d'étanchéité ou de joints constitués de plusieurs pièces d'étanchéité non solidaires les unes des autres et qu'il faut empiler avec soin dans le bon ordre avec précaution dans des logements spéciaux.

Les caractéristiques recherchées sont les suivantes:

1. Le joint suivant l'invention est un joint (complexe constitué de trois pièces solidarisées) monobloc qui se monte comme une simple rondelle, entre un raccord fileté normalisé du commerce et un appareil présentant un taraudage normal standard du commerce.

Ceci est obtenu sans qu'il soit nécessaire de procéder à l'exécution d'un embrèvement ou d'un logement spécial, d'un surfaçage des faces d'appui qui restent dans leur état initial, et sans prendre aucune précaution particulière.

2. Le couple de serrage pour obtenir l'étanchéité du joint suivant l'invention est très modéré ce qui est très pratique et il es très inférieur au couple nécessaire au serrage étanche d'un joint en cuivre constitué d'une rondelle plate.

3. Le joint suivant l'invention lorsqu'il est serré, reste sur le raccord et ce dernier peut être monté et démonté de nombreuses fois avec une étanchéité parfaite et totale aux plus hautes pressions 400 bars en fonctionnement normal et avec des pointes de pression de 800 bars correspondant à des coups de bélier.

4. En raison de la boîte totalement étanche dans laquelle est enfermé le joint, l'étanchéité reste indéfiniment, la fiabilité est totale de plus le joint est toujours resserable.

Le joint d'étanchéité suivant l'invention a pour but d'obtenir une étanchéité parfaite, durable pour des fluides à haute pression, malgré la présence de défauts de surface ou d'équerrage pour les dispositifs de raccord et d'implantation par trou taraudé représentés sur les figures 1 à 9.

Conformément à la présente invention, le joint d'étanchéité est disposé entre un raccord pour tuyauterie de fluide à haute pression et un appareil présentant un trou taraudé dans lequel est vissée la partie filetée du raccord. Le joint d'étanchéité comprend une première bague en appui par l'une de ses deux faces contre la paroi (6b) de l'appareil (6) et présente un alésage (14a, 14b, 17a, 17b, 20b) dans lequel sont engagés autour du raccord (2) un organe d'étanchéité (13, 16, 19) en matériau fluable et malléable et une seconde bague (12, 15, 18) présentant en section la forme d'un coin. De plus le joint d'étanchéité est caractérisé en ce que la première bague est constituée par une frette (14, 17, 20) en matériau dur et résistant et que ladite seconde bague est constituée par une bague à sertir (12, 15, 18) en matériau ductile, ladite bague (12, 15, 18) étant sertie à l'intérieur de la frette (14, 17, 20) lors du vissage du raccord, de manière à constituer une enceinte annulaire étanche à volume variable dans laquelle est comprimé l'organe d'étanchéité (13, 16, 19) qui remplit par fluage ledit espace annulaire pendant l'opération de vissage du raccord, ladite enceinte annulaire étant délimitée par le raccord (2), la bague sertie (12, 15, 18) la frette (14, 17, 20) et la face de l'appareil (6) dont les points de contact constituent des moyens anti-extrusion de l'organe d'étanchéité (13, 16, 19), ladite frette et ladite bague à sertir étant solidarisées par des moyens ménagés sur la joint d'étanchéité.

La caractéristique principale du joint d'étanchéité suivant l'invention réside dans le fait qu'il présente un ensemble d'une hauteur beaucoup plus importante que les joints classiques, et qu'il forme, avec le raccord et la face avant du trou taraudé, une enceinte fermée par des points de contact constituant des moyens d'antiextrusion permanents. Le volume variable de cette enceinte étant réduit lors du vissage du raccord jusqu'à ce que l'organe d'étanchéité fluable ait entièrement rempli par fluage sous haute pression ladite enceinte.

La matière fluable de l'organe d'étanchéité remplit tous les interstices de l'enceinte fermée, les jeux du filetage, les défauts, les rayures, les gorges, les chanfreins et les logements. Le raccord vient en position de blocage à la fin de la compression de la matière fluable constituant l'organe d'étanchéité dans l'enceinte annulaire.

Le dispositif suivant l'invention est auto-étanche, du fait que le fluide sous pression qui arrive par le filetage ne peut que surcomprimer l'organe d'étanchéité dans son enceinte et augmenter l'étanchéité. Ce dispositif qui compense tous les défauts de surface et d'équerrage est antivibratoire et son freinage empêche le raccord de se déviser même avec des fortes vibrations.

Enfin, le joint d'étanchéite suivant l'invention peut être démonté et remonté plusieurs fois.

Les organes d'étanchéité sont constitués de matières qui conviennent à tous les produits utilisés pour l'asservissement hydraulique et qui permettent une utilisation pendant de nombreuses années et au moins la durée d'une machine moderne.

Ces joints sont utilisables pour des pressions comprises entre 0 et 400 bars et leur montage avec une enceinte fermée ne subit pas le classique phénomène de pompage dû aux cycles de pression et à l'usure qui résulte de ce phénomène.

La résistance de l'organe d'étanchéité à une température de 100°C ne pose aucun problème et il est possible d'aller au-delà avec des matières appropriées.

Ces joints ne présentent aucune difficulté de montage du fait qu'il suffit de les engager par leur petit diamètre sur le corps du raccord qui est vissé dans le trou taraudé. Ces joints sont vraiment universels du fait qu'il peuvent assurer l'étanchéité des raccords vissés les plus utilisés.

D'autres caractéristiques et avantages de l'invention seront mieux compris à la lecture de la description qui va suivre de plusieurs modes de réalisation et en se référent aux dessins annexés, sur lesquels:

Les figures 1 à 9 sont des vues en élévation et en coupe du montage de raccords vissés sur des appareils avec des moyens d'étanchéité de type connu.

La figure 10 est une vue en élévation et en coupe axiale d'un mode de réalisation d'un joint d'étanchéité suivant l'invention.

La figure 11 est une vue en élévation et en coupe du joint d'étanchéité précédent monté avant et après serrage sur un raccord.

La figure 12 est une demi-vue en coupe à plus grande échelle du raccord représenté à la figure 10.

La figure 13 est une demi-vue en coupe d'une variante de réalisation du raccord représenté à la figure 12.

La figure 14 est une vue en élévation et en coupe du montage avant et après serrage d'un joint d'étanchéité sur un raccord.

La figure 15 est une demi-vue en coupe à échelle agrandie du joint d'étanchéité représenté à la figure 14.

Les figures 16 à 19 sont des vues en élévation et en coupe d'un joint d'étanchéité suivant l'invention monté sur différents types de raccord.

La figure 20 est une vue en élévation et en coupe d'un raccord muni d'un autre mode de réalisation d'un joint d'étanchéité.

La figure 21 est une demi-vue en coupe à échelle agrandie du joint d'étanchéité représenté à la figure 20.

La figure 22 est une demi-vue en coupe d'un autre mode de réalisation d'un joint d'étanchéité.

La figure 23 est une vue en élévation et en coupe du joint d'étanchéité de la figure 22 monté sur un raccord.

La figure 24 est une vue en élévation et en coupe du montage d'un autre mode de réalisation de joint d'étanchéité sur un raccord.

La figure 25 est une demi-vue en coupe à échelle agrandie du joint d'étanchéité représenté à la figure 24.

La figure 26 est une vue en élévation et en coupe du montage d'un autre mode de réalisation d'un joint d'étanchéité sur un raccord.

La figure 27 est une demi-vue en coupe à échelle agrandie du joint d'étanchéité représenté à la figure 26.

La figure 28 est une vue en élévation et en coupe du montage d'un joint d'étanchéité sur un appareil présentant une face en faux équerre.

La figure 29 est une demi-vue d'un autre mode de réalisation d'un joint d'étanchéité.

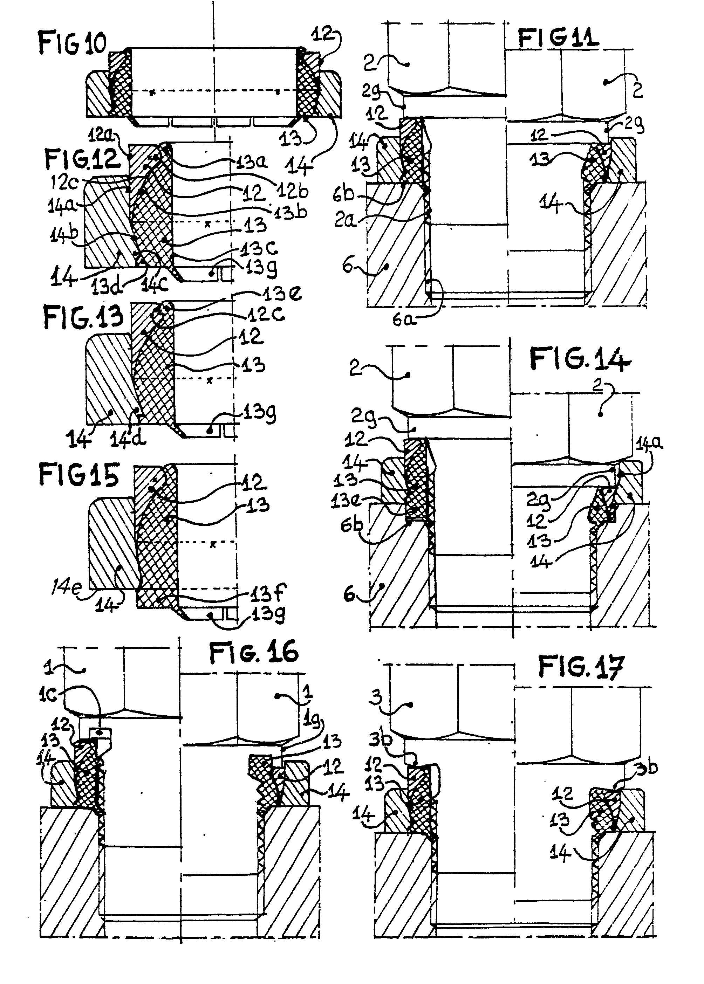

A la figure 10 on a représenté un joint d'étanchéité suivant l'invention prêt à l'emploi. Ce joint comprend une frette 14 constitué par une bague en acier de section importante et ayant subi un traitement pour en augmenter la résistance aux efforts, une bague 12 de faible section en métal malléable notamment en acier recuit et destinée à être sertie dans la frette 14, un organe d'étanchéité 13 en matière plastique malléable et déformable, mais non molle. L'organe d'étanchéité peut être réalisé en toute autre matière possédant les mêmes qualités, telle que des métaux mous, etc. pouvant allier la ténacité, la déformabilité et la fluabilité. Ces trois éléments sont solidaires, la frette 14 et la bague à sertir 12 étant reliées par l'organe d'étanchéité 13.

Aux figures 11 et 12 on a représenté plus en détail le joint d'étanchéité dont la frette 14 comporte un alésage qui présente à l'entrée de la bague 12 une partie cylindrique 14a prolongée par une partie conique 14b et une nervure 14c délimitant du côté opposé à l'entrée une rainure circulaire.

Dans la partie cylindrique 14a de l'alésage de la frette 14 est disposée la bague 12 à sertir qui présente en section la forme d'un coin et comporte une surface extérieure cylindrique 12a coopérant avec l'alésage de la frette et une surface intérieure sphérique concave 12c, ladite bague étant montée dans l'alésage de la frette jusqu'à la partie conique 14b. L'organe d'étanchéité 13 est disposé à l'intérieur de l'alésage de la frette et il maintient serré contre cette dernière la bague 12, de telle sorte que la partie sphérique 13b de l'organe d'étanchéité épouse la surface sphérique 12c de la bague et que des nervures périphériques 13a et 13d de l'organe d'étanchéité 13 sont engagées dans des logements correspondants de la frette 14 et de la bague 12. Cette disposition permet un encliquetage de la frette 14 et de la bague 12 sur l'organe d'étanchéité 13 de manière à constituer un ensemble manipulable présentant un alésage cylindrique 13c ménagé dans l'organe d'étanchéité.

Du côté opposé à la bague 12, l'organe d'étanchéité 13 présente de fines lèvres circulaires 13g qui empêchant le montage à l'envers sur la partie filetée 2a du raccord, lesdites lèvres 13g qui s'engagent aisément dans le filetage du raccord 2 empêchent le glissement du joint d'étanchéité et rendent ce dernier imperdable.

A la figure 11, on a représenté sur la demi-vue de gauche un joint d'étanchéité monté en début de serrage sur la partie filetée 2a d'un raccord 2 comportant un corps à face plate et dont la partie filetée est vissée dans un trou taraudé 6a d'un appareil 6.

Dans cette disposition il est visible que le corps de raccord 2, la bague 12, la frette 14, la face avant 6b du trou taraudé 6a de l'appareil, la partie filetée 2a délimitent une enceinte annulaire fermée renfermant l'organe d'étanchéité 13.

Lorsqu'on procéde au serrage du raccord 2 par vissage de la partie filetée 2a dans le trou taraudé 6a, la force de serrage est transmise à la face radiale de la bague 12 par le corps 2, ladite bague, étant chassée dans la partie conique 14b de la frette, se trouve sertie radialement en comprimant l'organe d'étanchéité 13 dans l'espace annulaire fermé défini ci-dessus, comme représenté sur la partie droite de la figure 11 qui représente le joint en fin de serrage. La pénétration axiale et le sertissage radial de la bague 12 produisent une importante réduction du volume de l'espace annulaire dans lequel est enfermé l'organe d'étanchéité 13 qui par déformation fluo-plastique à haute pression remplit l'enceinte jusque dans ses moindres logements.

Pendant toute la période de vissage et de déformation de l'organe d'étanchéité, on réalise trois points de contact sous une très grande pression qui permettent de réaliser trois moyens d'antiextrusion de l'organe d'étanchéité.

L'un de ces moyens antiextrusion est obtenu lors du sertissage de la bague 12 où il se produit une tension importante entre la bague et la face d'appui du raccord 2, réalisant ainsi un contact sous haute pression entre la bague 12 et le corps 2 empêchant l'extrusion de l'organe d'étanchéité 13. Ce contact entre la bague et le corps se produit pendant toute la course de vissage et il est maintenu lors du blocage total.

Un autre moyen antiextrusion est obtenu par l'effort de sertissage de la bague 12 dans la partie conique 14b de la frette 14 qui provoque une force résultante appliquant la frette 14 sur la face 6b ce qui réalise un point de contact empêchant l'extrusion de l'organe d'étanchéité 13 entre la frette 14 et l'appareil 6.

Enfin un autre moyen antiextrusion est obtenu par la grande résistance au sertissage radial de la bague 12 (figure 11) dans la frette 14, le long de la partie conique 14b qui réalise un contact sous une pression importante entre la frette 14 et la bague 12 et empêche l'extrusion de l'organe d'étanchéité 13 entre ces deux éléments. Lors du serrage total du raccord 2 la collerette cylindrique 2g (figure 11) pénètre à l'intérieur de la frette 14, ce que augmente la course de vissage et la réduction de l'enceinte annulaire renfermant l'organe d'étanchéité.

A la figure 13, on a représenté un autre mode de réalisation du joint d'étanchéité dans lequel on utilise des nervures 13e sur le joint 13 et 14d sur la frette qui assurent un encliquetage indémontable et irréversible du joint 13 sur la frette 14 et la bague 12.

Aux figures 14 et 15 on a représenté une variante de réalisation du joint d'étanchéité représenté aux figures 11 et 12, dans laquelle il est prévu l'organe d'étanchéité 13 présente du côté opposé à la bague 12 à sertir une couronne 13f s'étendant au-delà de la face 14e de la frette 14 et destinée à remplir un logement annulaire 6b de l'appareil 6, prévu autour du trou taraudé 6a. La bague 12 pénètre souvent dans le logement 6b ce qui augmente encore la source de vissage et de réduction de l'enceinte fermée dans laquelle est disposé l'organe d'étanchéité.

A la figure 15, on a représenté un joint d'étanchéité identique à celui de la figure 10, mais il est monté sur un raccord 1 et un appareil identiques à ceux représentés à la figure 1. Toutefois, le raccord 1 présente du côté de sa face d'appui contre la bague 12 un logement annulaire 1c que l'organe d'étanchéité remplit complètement ainsi qu'il est représenté sur la demi-vue de droite de la figure 16 lorsque le joint est en position serrée.

A la figure 17, on a représenté le joint de la figure 10 monté sur le raccord et l'appareil de la figure 3. Dans ce cas l'arête périphérique 3b constitue l'organe d'appui du raccord qui vient en contact avec la bague 12 lors du serrage du raccord et provoque son sertissage dans la frette 14. Il faut noter que le corps 3 peut venir en butée à la limite sur la frette 14, réduisant un peu la course de vissage.

A la figure 18 on a représenté le joint de la figure 10 monté sur le raccord et l'appareil 8 de la figure 4.

Dans ce cas le filetage 4a est conique et engagé dans un trou taraudé cylindrique 8a, de telle sorte que l'organe d'étanchéité 13 remplit tout l'espace entre le filetage conique et le taraudage cylindrique. Pour obtenir un bon résultat, il faut que l'enceinte soit bien fermée et qu'il existe un contact radial efficace entre le corps 4 et la bague sertie 12.

A la figure 19, on a représenté le joint de la figure 10 monté sur le raccord 5 et l'appareil 9 de la figure 4. Dans ce cas, la partie filetée 5a et le trou taraudé 9a présentant des filetages coniques, l'organe d'étanchéité 13 remplit non seulement l'enceinte fermée mais l'espace entre les filetages.

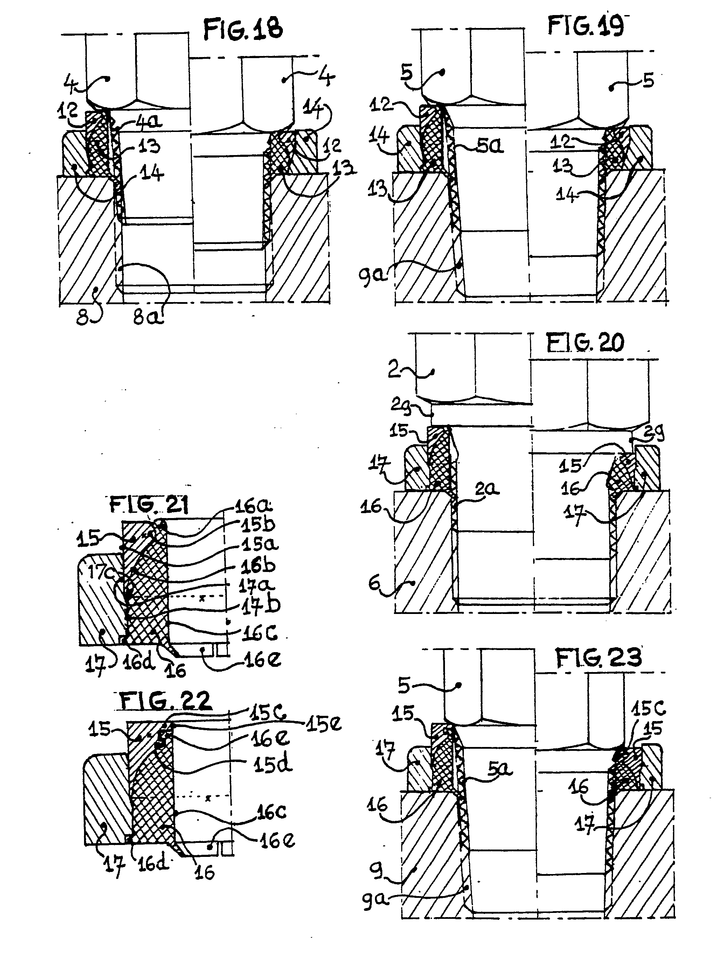

Aux figures 20 et 21, on a représenté un variante de réalisation du joint d'étanchéité dans laquelle la frette 17 comporte intérieurement deux alésages 17a, 17b reliés entre eux par une petite partie conique 17c. L'alésage 17a situé du côté de l'entrée de la bague 15 à sertir présente un plus grand diamètre que celui situé du côté de l'appareil 6.

Lors du montage du joint sur le raccord 2, comme représenté sur la demi-vue de gauche de la figure 20, la bague 15 est engagée dans l'alésage 17a de la frette.

En procédant au serrage du raccord, on engage sous l'effort axial la bague 15 dans l'alésage 17b de plus petit diamètre de telle sorte que la bague subit un sertissage radial comme dans le cas de la frette 14, ménageant une enceinte fermée dans laquelle est comprimé l'organe d'étanchéité 16 ainsi qu'il a été décrit ci-dessus. Aux figures 22 et 23 on a représenté une variante du joint de la figure 21 dans laquelle on utilise le plus petit diamètre d'appui de la bague 15 sur le raccord 5 qui présente une très faible portée.

Dans ce cas, la bague à sertir 15 présente un augmentation de sa surface d'appui vers l'intérieur et elle présente un diamètre intérieur 15a qui est égal au diamètre intérieur 16c de l'organe d'étanchéité. L'encliquetage des trois éléments 15, 16, 17 pour former un seul ensemble est obtenu par les nervures 16d, 15d, et 16e.

Après le sertissage de la bague 15 sur la demi-vue de droite de la figure 23, la partie 15c porte sur le corps de raccord 5 et on réalise ainsi l'auto-extrusion, au besoin en tenant compte de la forme du corps 5.

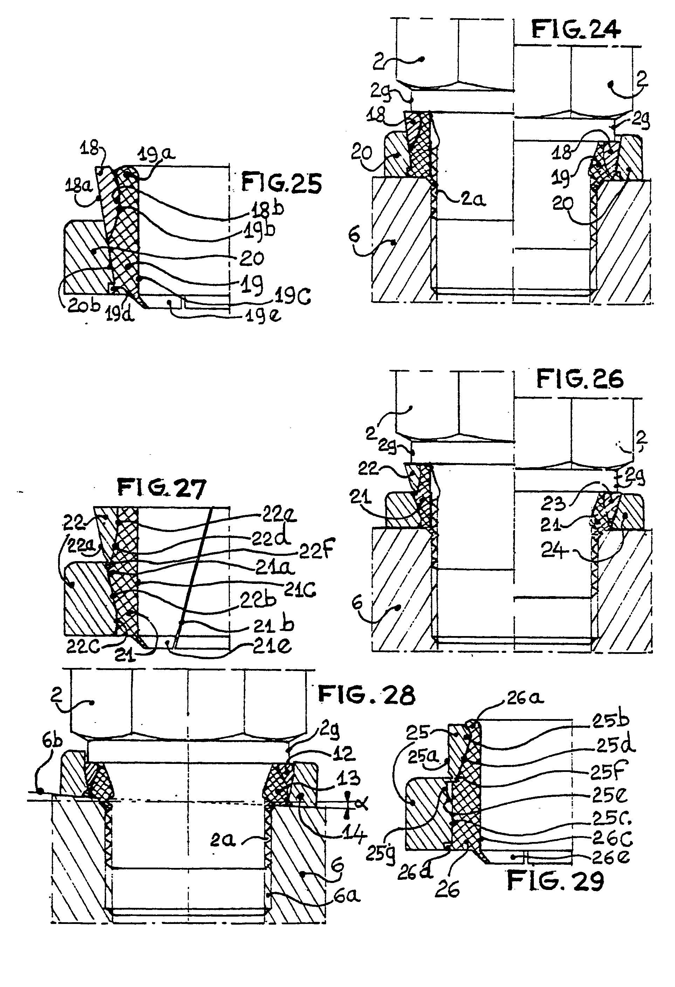

Aux figures 24 et 25 on a représenté une variante de réalisation du joint d'étanchéité dans lequel la frette 20 présente un alésage conique 20b et la bague à sertir 18 à section en forme de coin présente extérieurement une surface conique 18a en contact avec l'alésage 20b, ladite bague présentant une surface intérieure 18a sphérique convexe en forme de diabolo coopérant avec la face extérieure 19b de l'organe d'étanchéité 18 pour son encliquetage. Comme représenté à la figure 24, le joint étant monté sur un raccord représenté à la figure 2, on procède au vissage du raccord 2 de telle sorte que le corps repousse la bague 18 dans l'alésage conique 20b de la frette où ladite bague est sertie radialement au fur et à mesure du vissage jusqu'à ce que l'enceinte fermée contenant l'organe d'étanchéité 19 soit entièrement remplie de la matière constituant ledit organe et que le raccord soit en position de blocage.

Aux figures 26 et 27, on a représenté une variante du joint représenté aux figures 24 et 25, toutefois ce joint comporte avant serrage deux pièces au lieu de trois pièces comme dans les joints précédents.

A cet effet, la frette et la bague à sertir sont réalisées en une seule pièce 22 en acier ou autre métal, décolletée. La frette et la bague sont reliées par une partie annulaire amincie 22f susceptible de se rompre lors du vissage du raccord 2, de manière à obtenir une frette 24 et une bague 23 comme représenté sur la demi-vue de droite de la figure 26. Le sertissage de la bague 18 et le serrage par compression de l'organe d'étanchéité 21 dans l'enceinte fermée s'effectuent comme précédemment. L'organe d'étanchéité 21 présente dans ce cas facultativement une fente inclinée 21b pour faciliter le montage dans la bague 22.

A la figure 28, on a représenté la possibilité de monter de façon étanche un organe de raccordement dans un trou taraudé d'un appareil dont une face d'appui n'est pas d'équerre dans le cas de la figure 2, mais il est bien évident que ceci peut s'appliquer aux raccords représentés sur les figures 1 à 9.

Ainsi qu'il est bien visible sur la figure 28, la face 6b d'appui de la frette 14 présente un faux équerrage (angle α) et dans ce cas la bague 12 lors du sertissage se déforme pour compenser l'inclinaison, tout en restant en appui sur le corps du raccord 2 et en maintenant la frette 14 en appui avec force sur la face inclinée 6b. De cette manière, l'étanchéité de l'enceinte fermée à volume variable dégressif est parfaitement assurée par les trois moyens antiextrusion réalisés sans difficultés. La forme sphérique de la bague 12 utilisée et la forme sphérique de l'organe d'étanchéité 13 facilitent la portée en faux équerre.

A la figure 29 on a représenté une variante du joint de la figure 21 dans lequel les pièces métalliques 25 sont réalisées en une seule pièce décolletée, avec une partie annulaire amincie 25f susceptible de se rompre lors du serrage du raccord afin de libérer la bague 12 qui est sertie ensuite exactement de la même façon que celle décrite ci-dessus et représentée à la figure 20. Les joints avec enceinte étanche à volume variable et comportant trois moyens antiextrusion décrits ci-dessus permettent donc une étanchéité à haute fiabilité dans les plus mauvaises conditions de surface, d'équerrage, en compensant toutes les imperfections d'usinage et toutes les rayures inévitables provenant des manipulations et du stockage.

La présente invention trouve ses applications dans tous les domaines où l'on utilises des fluides sous des pressions importantes de 0 à 400 bars et en particulier dans l'asservissement hydraulique des machines.

Ce raccord muni de son joint d'étanchéité est utilisé dans les machines-outils, les machines transfert, les robots, les tracteurs agricoles, les engins de levage, les grues, les pelleteuses, le bâtiment et les travaux publics.

L'industrie chimique est un domaine spécialement intéressant, car à l'aide de joints inertes chimiquement on peut garantir des étanchéités sans risque quelles que soient les conditions, et avec les fluides dangereux.

**Revendications**

1. Joint d'étanchéité disposé entre un raccord pour tuyauterie de fluide à haute pression et un appareil présentant un trou taraudé dans lequel eist vissée la partie filetée du raccord, le joint d'étanchéité comprenant une première bague en appui par l'une de ses deux faces contre la paroi (6b) de l'appareil (6) et présentant un alésage (14a, 14b, 17a, 17b, 20b) dans lequel sont engagés autour du raccord (2) un organe d'étanchéité (13, 16, 19) en matériau fluable et malléable et une seconde bague (12, 15, 18) présentant en section la forme d'un coin, caractérisé en ce que la première bague est constituée par une frette (14, 17, 20) en matériau dur et résistant et que ladite seconde bague est constituée par une bague à sertir (12, 15, 18) en matériau ductile, ladite bague (12, 15, 18) étant sertie à l'intérieur de la frette (14, 17, 20) lors du vissage du raccord, de manière à constituer une enceinte annulaire étanche à volume variable dans laquelle est comprimé l'organe d'étanchéité (13, 16, 19) qui remplit par fluage ledit espace annulaire pendant l'opération de vissage du raccord, ladite enceinte annulaire étant délimitée par le raccord (2), la bague sertie (12, 15, 18) la frette (14, 17, 20) et la face de l'appareil (6) dont les points de contact constituent des moyens anti-extrusion de l'organe d'étanchéité (13, 16, 19), ladite frette et ladite bague à sertir étant solidarisées par des moyens ménagés sur le joint d'étanchéité.

2. Joint d'étanchéité suivant la revendication 1, caractérisé en ce que la frette (14) comporte un alésage qui présente à l'entrée de la bague à sertir (12, 15) une partie cylindrique (14a) suivie d'une partie conique (14b).

3. Joint d'étanchéité suivant la revendication 1, caractérisé en ce que la frette (17) comporte deux alésages (17a, 17b) de diamètres différents reliés entre eux par une partie conique (17c), l'alésage (17a) de plus grand diamètre étant situé du côté de l'entrée de la bague à sertir (12, 15).

4. Joint d'étanchéité suivant la revendication 1, caractérisé en ce que la frette (20) présente un alésage conique (20b) sur toute sa hauteur dont le plus grand diamètre est situé du côté de l'entrée de la bague à sertir (18).

5. Joint d'étanchéité suivant l'une quelconque des revendications 1 à 3, caractérisé en ce que la

13 **0 091 844** 14

bague à sertir (12, 15) à section en forme de coin présente une surface extérieure cylindrique (12*a*) coopérant avec l'alésage de la frette (14) et une surface intérieure sphérique concave (12*c*) épousant une surface correspondante (13*b*) de l'organe d'étanchéité (13).

6. Joint d'étanchéité suivant l'une quelconque des revendications 1 et 4 caractérisé en ce que la bague à sertir (18) a section en forme de coin présente une surface extérieure conique (18*a*) coopérant avec l'alésage de la frette et une surface intérieure sphérique convexe (18*b*) en forme de diabolo coopérant avec la face extérieure de l'organe d'étanchéité (19).

7. Joint d'étanchéité suivant l'une quelconque des revendication 1, 2 et 5 caractérisé en ce que la bague à sertir (12) étant en contact dès son entrée dans la frette (14) avec la partie conique (14*b*) de l'alésage, elle subit lors du vissage du raccord (2) suivant une course axiale au moins égale à la hauteur de ladite partie conique (14*b*) un sertissage entraînant un contact sous tension avec la frette (14) constituant un moyen anti-extrusion de l'organe d'étanchéité (13) entre la frette (14) et la bague sertie (12).

8. Joint d'étanchéité suivant la revendication 7 caractérisé en ce que la bague (12) à sertir subit lors du vissage du raccord (2) suivant une course axiale au moins égale à la hauteur de la partie conique (14*b*) de la frette (14) un sertissage, entraînant un contact sous tension avec le corps de raccord (2) consituant un moyen antiextrusion de l'organe d'étanchéité entre le corps de raccord (2) et la baque sertie (12).

9. Joint d'étanchéité suivant la revendication 8 caractérisé en ce que la bague (12) à sertir subit lors du vissage du raccord (2) suivant une course axiale au moins égale à la hauteur de la partie conique (14*b*) de la frette un sertissage, entraînant un contact sous tension avec le corps (2) du raccord constituant un moyen anti-extrusion de l'organe d'étanchéité entre l'appareil (6) et la frette (14).

10. Joint d'étanchéité suivant l'une quelconque des revendications 1 à 6 caractérisé en ce que la bague (12, 15, 18, 23) à sertir et la frette (14, 17, 20, 24) sont réalisées en une seule pièce, ladite bague (12, 15, 18, 23) et la frette (14, 17, 20, 24) étant reliées entre elles par une partie annulaire amincie (22*f*), susceptible de se rompre lors du vissage du raccord de manière à obtenir une frette (14, 17, 20, 24) et une bague (12, 15, 18, 23) séparées.

11. Joint d'étanchéité suivant la revendication 1 caractérisé en ce que la bague (12) est sertie dans l'axe du corps de raccord et ladite bague (12) par sa réaction au sertissage maintient la frette (14) à plat en contact étroit avec la face de l'appareil 6, bien que la face (6*b*) soit en faux équerre (angle α) par rapport à l'axe du trou taraudé, ladite bague (12) à section en forme de coin étant sertie de travers en raison de sa déformation aisée dans la frette (14).

12. Joint d'étanchéité suivant la revendication 1 caractérisé en ce que la frette (14), la bague à sertir (12) et l'organe d'étanchéité (13) sont solidarisés par encliquetage à force de l'organe d'étanchéité au moyen d'organes d'accrochage (12*b*, 13*a*, 14*c*, 13*d*) en contre-dépouille à accrochage réversible positif, l'organe d'étanchéité (13) étant annulaire et continu ou présentant une seule fente longitudinale (21*b*).

13. Joint d'étanchéité suivant la revendication 1 caractérisé en ce que l'organe d'étanchéité (13) présente du côté de sa face en contact avec l'appareil (6) un couronne (13*f*) s'étendant au-dela de la face de la frette (14) et destinée à remplir un logement (6*b*) complémentaire prévu dans l'appreil (6).

14. Joint d'étanchéité suivant la revendication 1 caractérisé en ce que la bague à sertir (12), la frette (14) et l'organe d'étanchéité (13) sont solidarisés par moulage de l'organe d'étanchéité dans un moule renfermant la bague à sertir (12) et la frette (14) qui forment des inserts prisonniers de l'organe d'étanchéité (13).

15. Joint d'étanchéité suivant la revendication 1 caractérisé en ce que l'organe d'étanchéité (13) présente du côté de sa face en contact avec l'appareil des lèvres minces (13*g*) indiquant le sens de montage du joint, lesdites lèvres (13*g*) étant engagées dans le filetage du raccord (2) rendant ledit joint imperdable dès qu'il est monté sur le raccord (2).

16. Joint d'étanchéité suivant la revendication 1 caractérisé en ce que le même joint complet, placé sur un corps fileté de même diamètre ou de diamètres très voisins, remplit l'enceinte annulaire par le fluage de l'organe d'étanchéité, les formes et le volume de l'enceinte annulaire étant différents, les compensations de forme et de volume de ladite enceinte étanche étant obtenues par un blocage du joint à des hauteurs différentes.

**Patentansprüche**

1. Dichtung, die zwischen einem Anschluß einer Hochdruck-Strömungsrohrleitung und einem Gerät angeordnet ist, welches ein Gewindeloch aufweist, worin der Gewindeteil des Anschlusses eingeschraubt ist, wobei diese Dichtung einen ersten Ring aufweist, der sich mit einer seiner beiden Flächen gegen die Wand (6*b*) des Gerätes· (6) abstützt und eine Bohrung (14*a*, 14*b*, 17*a*, 17*b*, 20*b*) aufweist, worin um den Anschluß (2) herum ein Dichtungsorgan (13, 16, 19) aus fließfähigem und knetbarem Material sowie ein zweiter Ring (12, 15, 18) eingesetzt sind, die im Querschnitt die Form eines Kegels aufweist, dadurch gekennzeichnet, daß der erste Ring durch ein Bewehrungsband (14, 17, 20) aus hartem und widerstandsfähigem Material gebildet ist und der zweite Ring alt Quetschring (12, 15, 18) aus geschmeidigem Material gebildet ist, wobei der genannte Ring (12, 15, 18) im Inneren des Bewehrungsbandes (14, 17, 20) während der Verschraubung des Anschlusses eingefaßt wird, so daß eine dichte Ringkammer mit variablem Volumen gebildet wird, worin das Dichtungsorgan (13, 16, 19) zusammengedrückt wird, welches den Ringraum während der Verschraubung des Anschlusses durch Fließen ausfüllt, wobei die genannte Ringkammer begrenzt ist durch den Anschluß (2), den eingefaßten Ring (12, 15, 18), das Bewehrungsband (14, 17, 20) und die Fläche des Gerätes (6), deren Kontaktpunkte Mittel zum Verhindern des Herausdrückens des Dichtungsorgans (13, 16, 19) bilden, wobei das genannte Bewehrungsband und der genannte Quetschring fest miteinander verbunden sind durch Mittel, welche an der Dichtung angebracht sind.

2. Dichtung nach Anspruch 1, dadurch gekennzeichnet, daß das Bewehrungsband (14) eine Bohrung umfaßt, die am Eingang des Quetschringes (12, 15) einen zylindrischen Teil (14a) aufweist, worauf ein konischer Teil (14b) folgt.

3. Dichtung nach Anspruch 1, dadurch gekennzeichnet, daß das Bewehrungsband (17) zwei Bohrungen (17a, 17b) verschiedener Durchmesser aufweist, welche miteinander durch einen konischen Teil (17c) verbunden sind, wobei die Bohrung (17a) mit dem größeren Durchmesser auf der Seite des Eingangs des Quetschrings (12, 15) liegt.

4. Dichtung nach Anspruch 1, dadurch gekennzeichnet, daß das Bewehrungsband (20) eine konische Bohrung (20b) über seine gesamte Höhe aufweist, deren großer Durchmesser auf der Seite des Eingangs des Quetschrings (18) liegt.

5. Dichtung nach einem der Ansprüche 1 bis 3, dadurch gekennzeichnet, daß der Quetschring (12, 15) mit kegelförmigem Querschnitt eine zylindrische Außenoberfläche (12a) aufweist, welche mit einer Bohrung des Bewehrungsbandes (14) zusammenwirkt, und eine kugelförmig konkave Innenoberfläche (12c) aufweist, welche sich an eine entsprechende Oberfläche (13b) des Dichtungsorgans (13) anschmiegt.

6. Dichtung nach einem der Ansprüche 1 und 4, dadurch gekennzeichnet, daß der Quetschring (18) mit kegelförmigem Querschnitt eine konische Außenoberfläche (18a) aufweist, die mit der Bohrung des Bewehrungsbandes zusammenwirkt, und eine kugelförmig konvexe Innenoberfläche (18b) in Diabolöform aufweist, welche mit der Außenfläche des Dichtungsorgans (19) zusammenwirkt.

7. Dichtung nach einem der Ansprüche 1, 2 und 5, dadurch gekennzeichnet, daß der Quetschring (12), der sich ab seiner Einführung in das Bewehrungsband (14) mit dem kegelförmigen Teil (14b) der Bohrung in Berührung findet, bei der Verschraubung des Anschlusses (2) über einen Axialhub, der wenigstens gleich der Höhe des genannten konischen Teils (14b) ist, eine Einquetschung erfährt, welche zu einem Kontakt unter Spannung mit dem Bewehrungsband (14) führt, das ein Mittel zum Verhindern des Herausdrückens des Dichtungsorgans (13) zwischen dem Bewehrungsband (14) und dem gequetschten Ring (12) bildet.

8. Dichtung nach Anspruch 7, dadurch gekennzeichnet, daß der Quetschring (12) bei der Verschraubung des Anschlusses (2) über einen axialen Hub, der wenigstens gleich der Höhe des konischen Teils (14b) des Bewehrungsbandes (14) ist, eine Einquetschung erfährt, die zu einem Kontakt unter Spannung mit dem Körper des Anschlusses (2) führt, welcher ein Mittel zum Verhindern des Herausdrückens des Dichtungsorgans zwischen dem Körper des Anschlusses (2) und dem Quetschring (12) bildet.

9. Dichtung nach Anspruch 8, dadurch gekennzeichnet, daß der Quetschring (12) bei der Verschraubung des Anschlusses (2) über einen Axialhub, der wenigstens gleich der Höhe des konischen Teils (14b) des Bewehrungsbandes ist, eine Einquetschung erfährt, welche zu einem Kontakt unter Spannung mit dem Körper (2) des Anschlusses führt, der ein Mittel zum Verhindern des Herausdrükkens des Dichtungsorgans zwischen dem Gerät (6) und dem Bewehrungsband (14) bildet.

10. Dichtung nach einem der Ansprüche 1 bis 6, dadurch gekennzeichnet, daß der Quetschring (12, 15, 18, 23) und das Bewehrungsband (14, 17, 20, 24) einteilig ausgebildet sind, wobei der genannte Ring (12, 15, 18, 23) und das Bewehrungsband (14, 17, 20, 24) miteinander durch einen verdünnten ringförmigen Teil (22f) verbunden sind, welcher dazu bestimmt ist, bei der Verschraubung des Anschlusses zu brechen, so daß ein Bewehrungsband (14, 17, 20, 24) und ein Ring (12, 15, 18, 23) erhalten werden, die getrennt sind.

11. Dichtung nach Anspruch 1, dadurch gekennzeichnet, daß der Ring (12) in der Achse des Anschlußkörpers eingefaßt ist und der genannte Ring (12) durch seinen Widerstand gegenüber der Einfassung das Bewehrungsband (14) flach in enger Berührung mit der Fläche des Gerätes 6 hält, obwohl die Fläche (6b) schräg (Winkel a) zur Achse des Gewindeloches steht, wobei der genannte Ring (12) mit kegelförmigem Querschnitt aufgrund seiner leichten Deformierung in dem Bewehrungsband (14) schräg eingefaßt ist.

12. Dichtung nach Anspruch 1, dadurch gekennzeichnet, daß das Bewehrungsband (14), der Quetschring (12) und das Dichtungsorgan (13) durch eine erzwungene Rastverbindung des Dichtungsorgans mittels Verhakungsorganen (12b, 13a, 14c, 13d), die eine Gegenschräge mit positiver reversibler Verhakung bilden, fest miteinander verbunden sind, wobei das Dichtungsorgan (13) ringförmig und durchgehend ist oder einen einzigen Längsschlitz (21b) aufweist.

13. Dichtung nach Anspruch 1, dadurch gekennzeichnet, daß das Dichtungsorgan (13) auf der Seite seiner sich mit dem Gerät (6) in Berührung befindlichen Fläche einen Kranz (13f) aufweist, der sich über die Fläche des Bewehrungsbandes (14) hinaus erstreckt und dazu bestimmt ist, eine in dem Gerät (6) vorgesehene komplementäre Aufnahme (6b) auszufüllen.

14. Dichtung nach Anspruch 1, dadurch gekennzeichnet, daß der Quetschring (12), das Bewehrungsband (14) und das Dichtungsorgan (13) fest miteinander verbunden sind durch Einformen des Dichtungsorgans in eine Form, welche den Quetschring (12) und das Bewehrungsband (14) einschließt, die Einsätze bilden, welche vom Dichtungsorgan (13) festgehalten werden.

15. Dichtung nach Anspruch 1, dadurch gekennzeichnet, daß das Dichtungsorgan (13) auf der Seite seiner sich in Berührung mit dem Gerät befindlichen Fläche dünne Lippen (13g) aufweist, welche die Richtung der Montage der Dichtung anzeigen, wobei die genannten Lippen (13g) in das Gewinde des Anschlusses (2) eingreifen, wodurch die genannte Dichtung, sobald sie auf dem Anschluß (2) aufgebracht ist, unverlierbar ist.

16. Dichtung nach Anspruch 1, dadurch gekennzeichnet, daß dieselbe, vollständige Dichtung, nachdem sie auf einem mit Gewinde versehenen Körper gleichen Durchmessers oder von annähernd gleichem Durchmesser aufgebracht ist, die Ringkammer durch Fließen des Dichtungsorganes ausfüllt, wobei die Formen und das Volumen der Ringkammer verschieden sind und wobei die Kompensationen von Form und Volumen der genannten dichten Kammer durch Blockieren der Dichtung in verschiedenen Höhen erhalten werden.

**Claims**

1. Sealing joint disposed between a connector for high-pressure fluid piping and an apparatus comprising a tapped hole into which is screwed the screw-threaded portion of the connector, the sealing joint having a first ring bearing with one of its two surfaces against the surface (6b) of the apparatus (6) and having a bore (14a, 14b, 17a, 17b, 20b) in which are fitted around the connector (2) a sealing member (13, 16, 19) of flowable and malleable material and a second ring (12, 15, 18) having a wedge-shaped section, characterised in that the first ring is formed by a collar (14, 17, 20) of tough and hard material and that the second ring is formed by an insert ring (12, 15, 18) of ductile material, the said ring (12, 15, 18) being inserted within the collar (14, 17, 20) during the screwing-in of the connector, in such a manner as to form a variable volume hermetic annular enclosure within which is compressed the sealing element (13, 16, 19) which by flowing action fills the said annular space during the operation of screwing-in of the connector, the said annular enclosure being delimited by the connector (2), the insert ring (12, 15, 18), the collar (14, 17, 20) and the surface of the apparatus (6) of which the contact points form anti-extrusion means for the sealing element (13, 16, 19), the said collar and the said insert ring being joined together by means provided on the sealing joint.

2. Sealing joint according to claim 1, characterised in that the collar (14) has a bore which presents at the entry for the insert ring (12, 15) a cylindrical portion (14a) followed by a tapered portion (14b).

3. Sealing joint according to claim 1, characterised in that the collar (17) has two bores (17a, 17b) differing in diameter and interconnected by a tapered portion (17c), the bore (17a) of greater diameter being situated at the side of entry for the insert ring (12, 15).

4. Sealing joint according to claim 1, characterised in that the collar (20) has a tapered bore (20b) throughout its height, of which the greater diameter is situated at the side for entry of the insert ring (18).

5. Sealing joint according to any one of claims 1 to 3, characterised in that the insert ring (12, 15) having a wedge-shaped section has a cylindrical outer surface (12a) cooperating with the bore of the collar (14) and a concave spheroidal inner surface (12c) mating with a corresponding surface (13b) of the sealing element (13).

6. Sealing joint according to any one of claims 1 and 4, characterised in that the insert ring (18) having a wedge-shaped section has a tapered outer surface (18a) cooperating with the bore of the collar and a convex spheroidal inner surface (18b) in the form of a "diabolo" cooperating with the outer surface of the sealing element (19).

7. Sealing joint according to any one of claims 1, 2 and 5, characterised in that the insert ring (12) being in contact immediately upon entering the collar (14) with the tapered section of the bore (14b) is subject during the screwing-in of the connector (2) along an axial stroke at least equal to the height of the said tapering section (14b) to an inserting operation causing contact under stress with the collar (14) forming an anti-extrusion means for the sealing element (13) between the collar (14) and the insert ring (12).

8. Sealing joint according to claim 7, characterised in that the insert ring (12) is exposed during the screwing-in of the connector (2) along an axial stroke at least equal to the height of the tapered section (14b) of the collar (14) to an inserting action, causing contact under stress with the connector body (2), forming an anti-extrusion means for the sealing element between the connector body (2) and the insert ring (12).

9. Sealing joint according to claim 8, characterised in that the insert ring (12) is exposed during the screwing-in of the connector (2) along an axial stroke at least equal to the height of the tapered section (14b) of the collar, to an inserting operation causing contact under stress with the connector body (2), forming an anti-extrusion means for the sealing element between the apparatus (6) and the collar (14).

10. Sealing joint according to any one of claims 1 to 6, characterised in that the insert ring (12, 15, 18, 23) and the collar (14, 17, 20, 24) are made in one piece, the said ring (12, 15, 18, 23) and the collar (14, 17, 20, 24) being joined together by an attenuated annular section (22f), able to tear during the screwing-in of the connector, in such manner as to produce a collar (14, 17, 20, 24) and a ring (12, 15, 18, 23) which are separate.

11. Sealing joint according to claim 1, characterised in that the ring (12) is inset in the axis of the connector body and by its reaction to the inserting action, the said ring (12) holds the collar (14) flat in close contact with the surface of the apparatus (6), although the surface (6b) is bevelled (angle α) with respect to the axis of the tapped hole, the said ring (12) having a wedge-shaped section being inset sideways because of its easy deformation in the collar (14).

12. Sealing joint according to claim 1, characterised in that the collar (14), the insert ring (12), and the sealing element (13) are interlocked by means of a force-locked detent connection of the sealing element via hook-on elements (12b, 13a, 14c, 13d) engaging in undercut means in positive reversible manner, the sealing element (13) being annular and continuous or comprising a single longitudinal slot (21b).

13. Sealing joint according to claim 1, characterised in that at the side of its surface in contact with the apparatus (6) the sealing element (13) has an annular projection (13f) extending beyond the surface of the collar (14) and intended to fill a complementary location (6b) formed in the apparatus (6).

14. Sealing joint according to claim 1, characterised in that the insert ring (12), the collar (14) and tha sealing element (13) are interlocked by moulding the sealing element within a mould containing the insert ring (12) and the collar (14) which form embedded inserts of the sealing element (13).

15. Sealing joint according to claim 1, characterised in that at the side of its surface in contact with the apparatus, the sealing element (13) has thin lips (13g) denoting the direction of installation of the joint, the said lips (13g) being engaged in the screw-thread of the connector (2) making the said joint loss-proof immediately upon being installed on the connector (2).

16. Sealing joint according to claim 1, characterised in that the same complete joint installed on an element of identical diameters or of very similar diameters, fills the annular enclosure by flowing of the sealing element, the shapes and volume of the annular enclosure being different, the compensations for the shape and volume of the said hermetic enclosure being obtained by locking the joint at different heights.

FIG.1　FIG.2　FIG.3　FIG.4　FIG.5

FIG 6　FIG 7　FIG.8　FIG.9

FIG 10

FIG.12

FIG.13

FIG15

FIG. 16

FIG 11

FIG. 14

FIG. 17

FIG.18

FIG.19

FIG.20

FIG.21

FIG.22

FIG.23

0 091 844

FIG.24

FIG.25

FIG.26

FIG.27

FIG.28

FIG.29

4